# EUROPEAN PATENT APPLICATION

(11) **EP 2 045 961 A1**
(43) Date of publication of application: **08.04.2009**
(21) Application number: 07253912.5
(22) Date of filing: 03.10.2007
(51) Int. Cl.: H04L 12/24, H04L 12/26

(54) **Communications network**

(71) Applicant: British Telecommunications Public Limited Company, London EC1A 7AJ (GB)
(72) Inventor: The designation of the inventor has not yet been filed
(74) Representative: Wilson, Peter David

(57) **Abstract**

A communications network in which a log produced by a network element is processed by a network element and then reported to a monitoring server and/or a client terminal. The log may be processed using a mark up language template.

## Description

The present invention relates to a method of operating a communications network, and in particular to a method of operating a communications network comprising heterogeneous network equipment.

It is common for communications networks to be constructed using equipment (such as routers, switches, transmission equipment, etc. [for the sake of clarity these will subsequently be referred to network elements]) that has been manufactured by different suppliers. This can cause problems when integrating the various network elements with operational support systems and when attempting to provide a unified interface for a system/network administrator.

According to a first aspect of the present invention there is provided a communications network comprising: one or more network elements, the or each network element comprising a network element client; one or more monitoring servers; and one or more client terminals, wherein the one or more network elements, monitoring servers and client terminals are inter-connected via the communications network wherein, in use, the or each network element client extracts a log from associated network element, transforms the log and transmits it to at least one or more monitoring server and/or at least one client terminal. Preferably wherein the network element client transforms the log by processing the extracted log with a template. The template preferably comprises mark-up language.

According to a second aspect of the present invention there is provided a method of managing a communications network in which a network element comprises a network element client, the network element client i) receiving a log from the network element; ii) processing the received log; and iii) forwarding the processed log to a monitoring server. The method may comprise the further step of iv) forwarding the processed log to a client terminal.

According to a third aspect of the present invention there is provided a computer program product, comprising computer executable code for performing a method as descried above.

The present invention uses templates, for example XML templates, which allows a unified interface to be provided, regardless of the manufacturer of the network element or the operating system of the platform supporting the network element. Instead of using separate monitoring/administration tools for different network elements, a network according to the present invention provides one standard administration interface to manage and/or monitor a group of network elements. Hence the complexity of network management is decreased.

A network according to the present invention presents an operator/administrator with all of the alarms that have been activated, across all of the network elements that are being managed or monitored.

The invention will be described with reference to the following Figures, which are provided by way of explanation only, in which:
Figure 1 shows a schematic depiction of a network according to the present invention;
Figure 2 shows a schematic depiction of this process in which a process log produced by the network element is received by the status event handler;
Figure 3 shows a schematic depiction of a GUI for the programmable client application;
Figure 4 which shows a schematic depiction of the network element client;
Figure 5 shows a flow chart which describes the operation of the network element client software
Figure 6 shows a schematic depiction of the architecture and sub-modules of a monitoring server
Figure 7 shows a flow chart which describes the operation of the monitoring server described above with reference to Figure 6
Figure 8 shows a schematic depiction of the architecture and sub-modules of an admin client
Figure 9 shows a flowchart that details the operation of the admin client 30

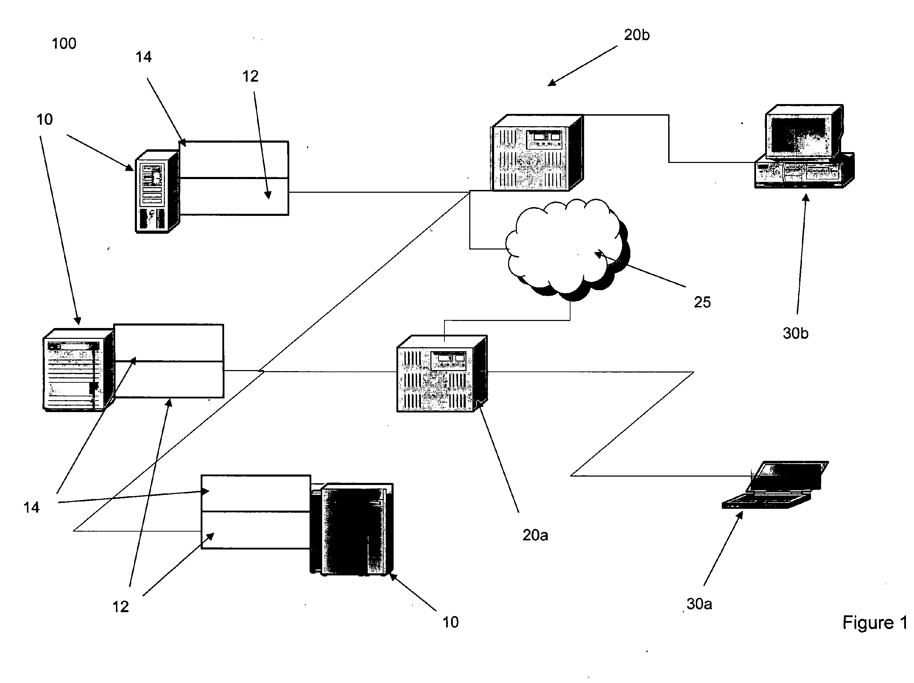

Figure 1 shows a schematic depiction of a network 100 according to the present invention which comprises a plurality of network elements 10, which are in communication with first and second monitoring servers 20a, 20b. The first and second monitoring servers are in communication with respective first and second admin clients 30a, 30b. A communications network 25 enables the communication between the various components that form the network. Preferably the communications network 25 is an IP (Internet Protocol) based network.

The network elements are a conventional network component, such as, for example, a router, switch, transmission equipment etc. Each of the network elements 10 comprises network element client software that comprises a broadcast agent 12 and a status event handler 14. The status event handler can receive logs from the network elements and then parse them into a mark-up language format (for example XML). For example the logs will comprise data such as timestamp, status, alarm, instruction, command, etc. In additional to the parsing of the log data into an XML message format, network element configuration data and attributes may be added to the parsed log data.

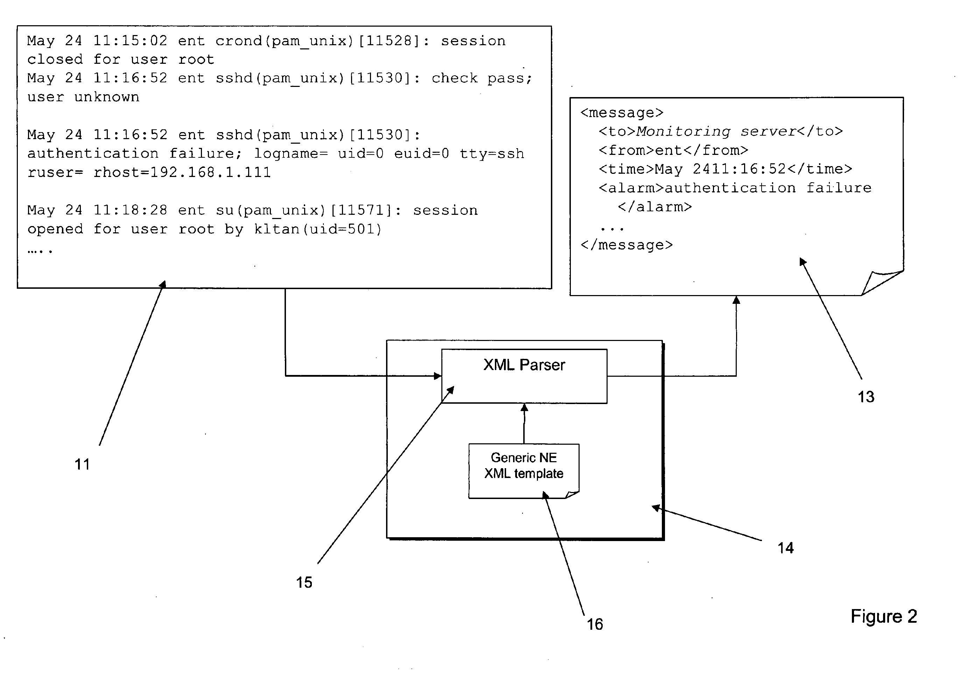

Figure 2 shows a schematic depiction of this process in which a process log 11 produced by the network element 10 is received by the status event handler. The status event handler comprises an XML parser 15 and a generic XML template. The status event handler produces an appropriately formatted XML message 13. The mapping between data/attributes within the logs to specific XML elements may be based on the contents of the generic XML template (Figure 2), which contains pre-programmed elements used to generate the status and available commands, if any, in response to this status. For example, a displayed status could be "authentication failure alert"; a actionable status could be "link down" with optional commands to reboot the network element, repair a network communications link, etc.. The status and available commands, if any, will be provided to the broadcast agent (see below). The XML template provides XML elements for mapping to data/attributes in all types of known network element. The XML elements are extensible where the device vendors, device owner and/or network/system operator could add and amend elements to suit and support the differences in the new network element. In the case where a network element does not produce its own log, the status event handler may prompt the network element to produce one or more logs. The status event handler will also process remote commands received by a network element which may originate from a Monitoring Server or from an Admin Client.

The broadcast agent 12 periodically sends the XML reports generated by the status event handler (along with any associated commands) to one (or more) of the monitoring servers or to one (or more) of the admin clients. Preferably the broadcast element is a lightweight XML agent. The periodicity with which the broadcast agent reports the data from the network element may be varied as required.

Referring to Figure 1, the first and second monitoring servers 20a, 20b are responsible for the registration and management of each of the network elements 10 (and the associated network element client software) and the routing and transmission of messages between each network element 10 and a monitoring server 20 and between a monitoring server 20 and an admin client 30. Furthermore, a connection may be made between a first monitoring server and a second monitoring server such that an admin client connected to a first network is able to monitor and administer network elements connected to a second network.

Once a monitoring server has registered a network element,, it is able to organize the network elements into functional groupings based on, for example, connectivity, geographical proximity, network element capabilities, services etc. The monitoring server component can automatically categorize a network element according to its functionality, and then allow an Admin-client to perform certain commands on all network elements having the same functionality. Such commands may be stored by the monitoring server for future reuse.

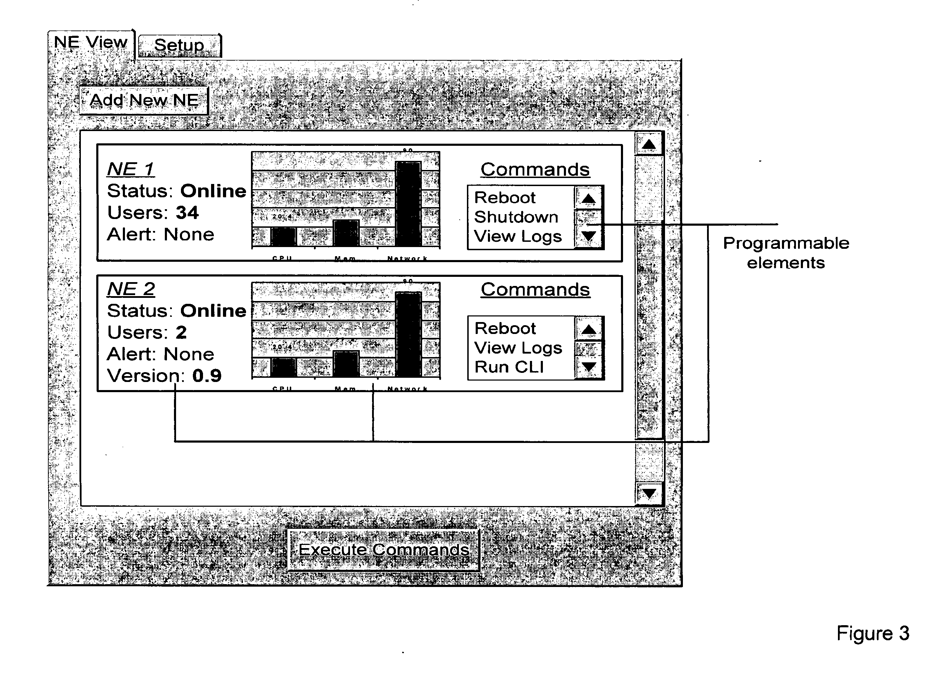

The admin client 30 is able to communicate with each of the network elements and the monitoring servers. The admin client provides a programmable client application that can receive XML messages from the network elements and display the content of these XML messages dynamically (along with the status of the network elements and any commands that have been executed by a network element). As the elements of the generic XML template are extensible then the programmable client application will have an extensible graphical user interface (GUI) such that the user can design the GUI to display network element status data in an appropriate graphical or textual manner. Figure 3 shows a schematic depiction of such a GUI for the programmable client application. The GUI may also be programmed to incorporate buttons (or other means) that enable a command to be selected and then sent remotely to one or more network elements. The programmable client application this provides a unified (yet customisable) interface for all network interfaces, regardless of their type or manufacturer.

In large and complex networks, it is preferred that the monitoring server components are installed on standalone servers (either as software or firmware). However, it will be readily appreciated that for smaller and/or simpler networks, it may be advantageous for the monitoring server and the admin client to be installed onto the same hardware.

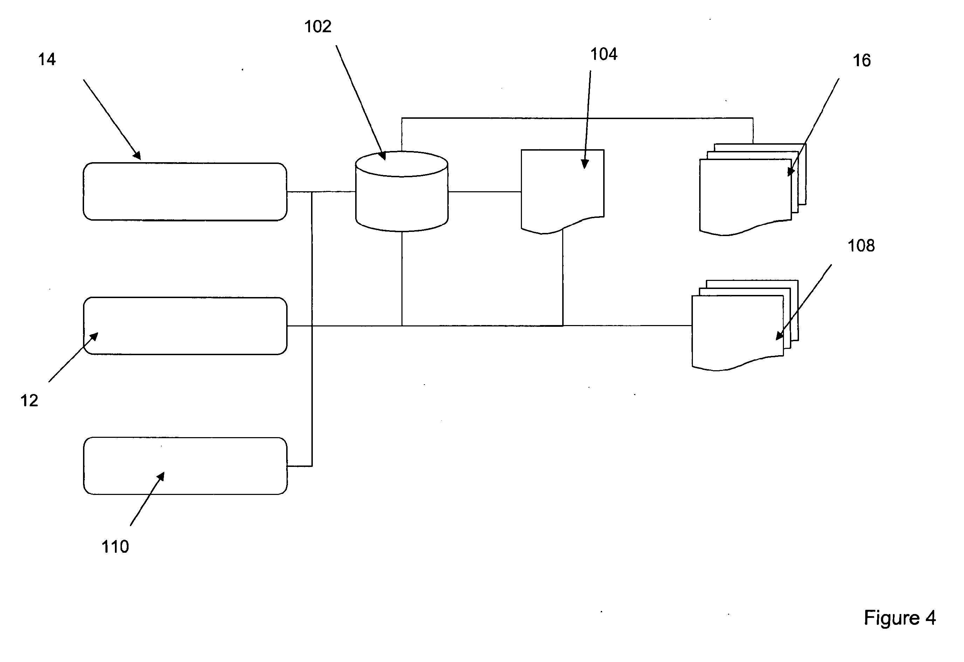

The operation of a method according to the present invention will now be described further, with reference to Figure 4 which shows a schematic depiction of the network element client, which is installed on each of the network elements in the network. The network element comprises broadcast agent 12, status event handler 14, buffer 102, preference settings 104, one or more device templates (preferably XML device templates) 16, remote control tasks 108 and user interface module 110.

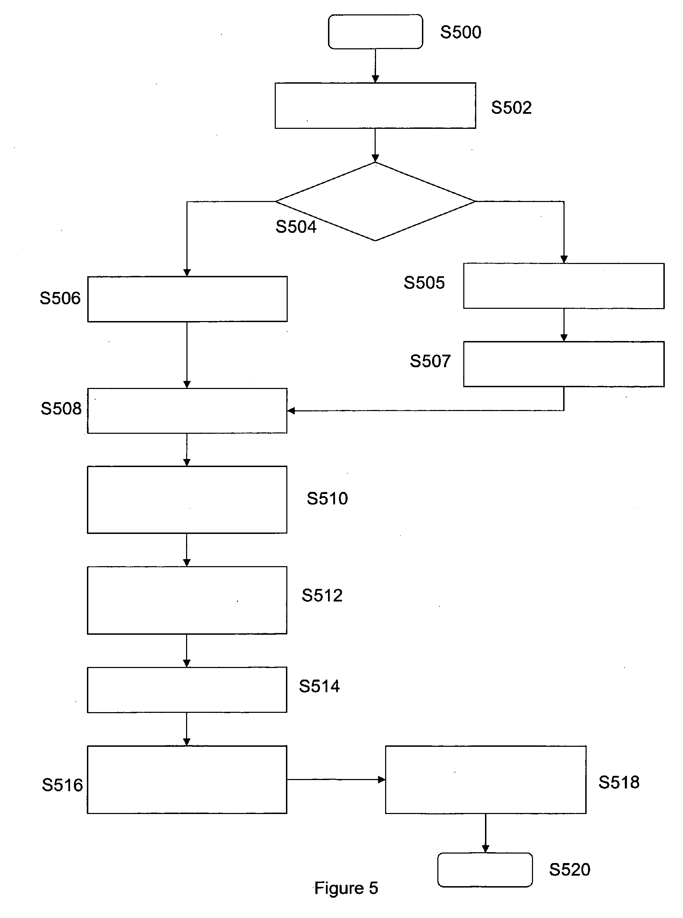

Figure 5 shows a flow chart which describes the operation of the network element client software. The process starts at step S500 and at S502 the client queries the status of the network element and at Step S504, determine whether the network can produce its own log. If not, then at step S505 the status event handler 14 will be invoked and at step S507 the status event handler acquires the network element's status log and generates a log. This can be achieved by using network port wrapper methods, such as monitoring all the communication ports of the network element and screening in real time all packets flowing in and out through the port(s). The content of the packet is processed, interpreted and converted into standard log format. If the network element does produce it's own log, then at step S506 the client will retrieve the relevant data from the log (for example status attributes & values, other non-functional properties (eg: modifiable, dependencies, value format, etc).)

In accordance with one or more settings held in the preference settings 104, an XML format device template 16 will be opened (step 508) and its attributes are populated with the values retrieved from the log (step S510). Next, the data is parsed as XML messaging message format (step S512) and written to the buffer 102. Periodically, the broadcast agent 12 will read the message from the buffer 102, retrieve its destination address and other data (for example, source address, network element type, time stamp, available commands, etc) from the preference settings 104, and then append this additional data into the message (step S516). The message can then be forwarded to the specified destination address (strep S518), which could be either a monitoring server or admin client. The process then ends at step S520.

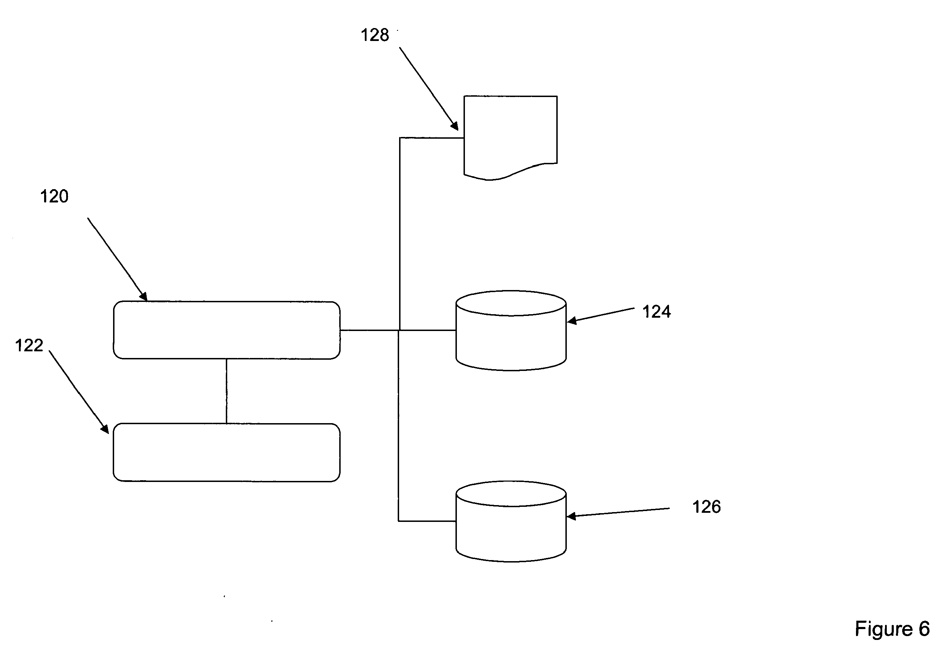

Figure 6 shows a schematic depiction of the architecture and sub-modules of a monitoring server 20, which comprises routing module 120, broadcast module 122, monitoring server database 124, accounts database 126 and preference settings 128.

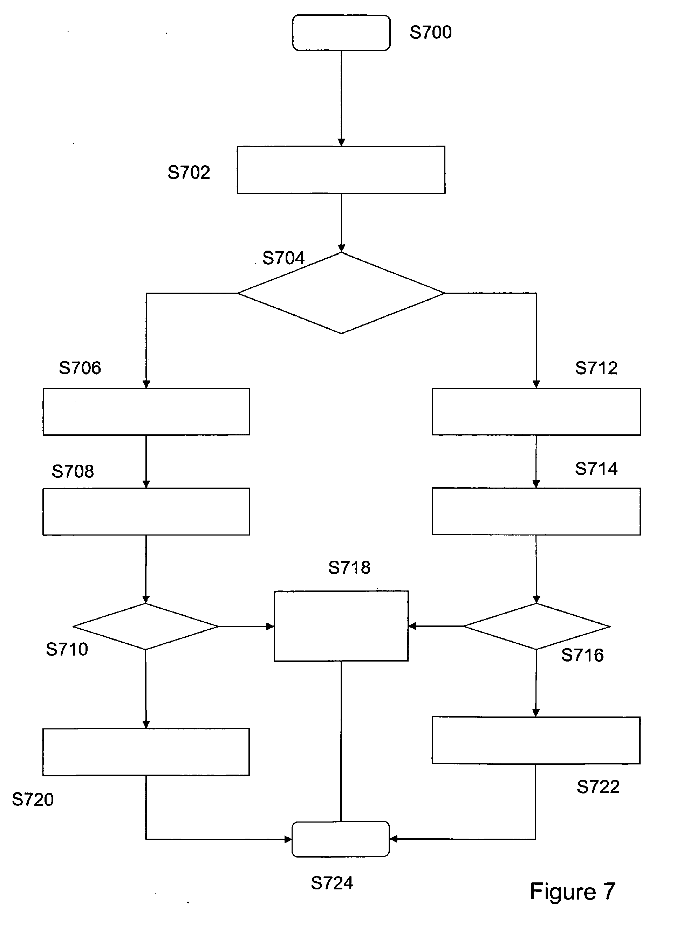

Figure 7 shows a flow chart which describes the operation of the monitoring server described above with reference to Figure 6. Each monitoring server is able to receive network element status messages from either a network element or from a different monitoring server. The process begins at S700 and at step S702 the server receives a status message. Once a message is received, the receiving server (step S704) checks if the destination address of the status message is within the same subnet as that of the receiving server. The routing module will be invoked (S712) and will query the monitoring server database 124 for an address that matches the indicated destination address. If at step S716 no valid match is found then the routing module will return a "unknown address" to the originating NE client or Monitoring Server (S718). If the query returns a valid address (step S716) then at step S722 the routing module forwards the status message to the appropriate monitoring server or admin client

If the result of step S704 is that the status message has been delivered to the correct monitoring server, then the accounts database 126 is queried to retrieve a list of Admin Client(s) (S706) and a test is carried out to verify the connectivity to Admin Client(s) (S708). If the admin client is identified (S710), then the routing module 120 will forward the message to the relevant Admin Client (S720), according to the configuration data defined in the preference settings 128. If the admin client can not be identified at step S710, then the routing module will return a "unknown address" to the originating NE client or Monitoring Server (S718).

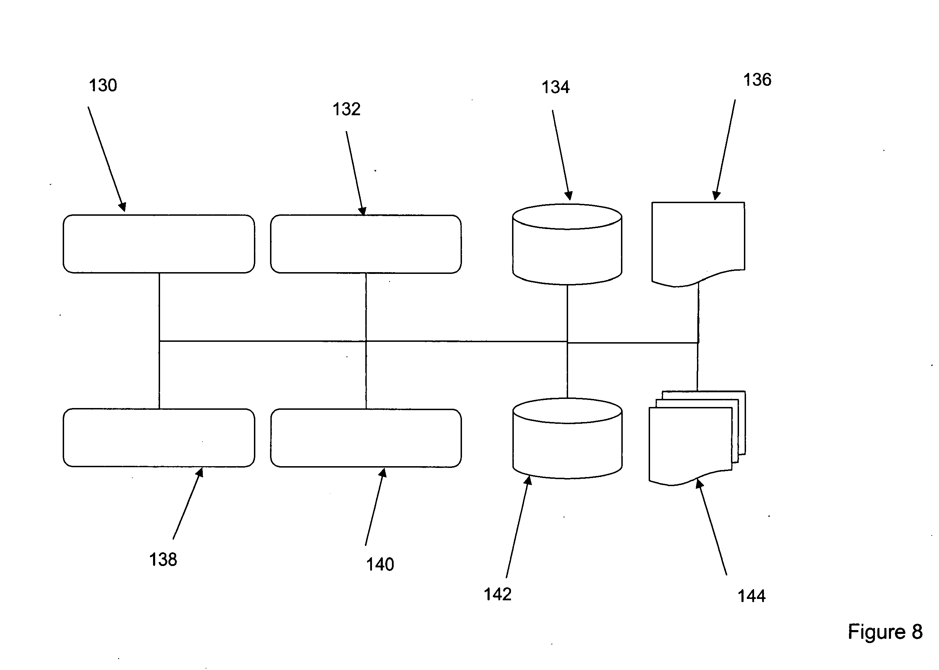

Figure 8 shows a schematic depiction of the architecture and sub-modules of an admin client 30. The admin client 30 comprises address book 134, XML UI templates 144, element objects database 142, preference settings 136, message parser 132, GUI module 138 layout mixer module 130 and message routing module 140.

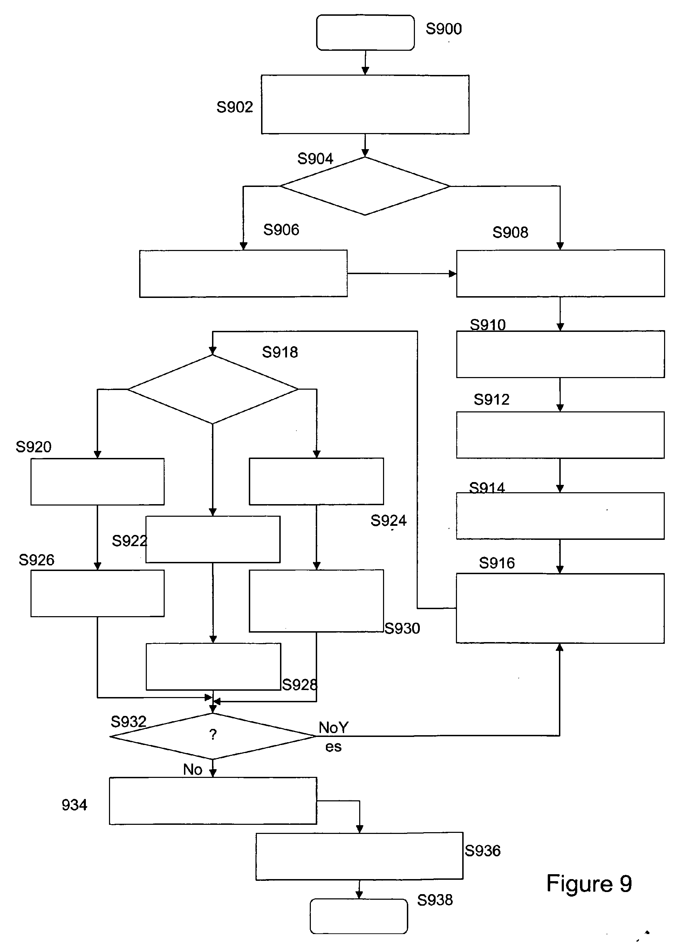

Figure 9 shows a flowchart that details the operation of the admin client 30. The process starts at S900 and a status message is received by th admin client (S902), either directly from a network element or from a monitoring server. The originating address and name of the network element are checked at Step 904: if the network element has not sent a status message to that admin client previously then the address book 134 is updated at S906. At step S908, the admin client determines the type of network element that sent the status message and the appropriate UI layout for that network element type is retrieved (S910) from the XML UI templates 144 and any non-default settings are retrieved from the preference settings 136 (S912) and used to update the UI layout accordingly.

At S914 the status message is un-parsed to obtain all of the attributes and data values associated with the network element. These attributes and data values are then mapped to a programmable element within the UI layout (step S916). For example, the UI layout may support three different programmable element types - Graphical, Text and Remote command (Form). For a graphical element, a graph element object can be opened from the element objects database 142 (S920) and embedded into the layout UI. The graph object element can then be populated using the attribute's name and values (step S926). Similar processes (S924& S930) applies to retrieving templates and populating them with th appropriate data for both the Text (S922 & S928) and Remote command (S922 & S928) attribute types. However, each form object will associate object selection to a specific command execution task (5.6) reference stored in NE Client. Once all attributes and values have been processed (S932), while referring to the pre-defined configuration stored in the preference settings 136, the Layout Mixer Module 130 will mix, arrange, format and display all the element objects as a single network element UI representation (step S936): an example of such a UI is shown in Figure 3.

## Claims

1. A communications network comprising:
one or more network elements, the or each network element comprising a network element client;
one or more monitoring servers; and
one or more client terminals, wherein the one or more network elements, monitoring servers and client terminals are inter-connected via the communications network
wherein, in use, the or each network element client extracts a log from associated network element, transforms the log and transmits it to at least one or more monitoring server and/or at least one client terminal.

2. A communications network according to Claim 1, wherein the network element client transforms the log by processing the extracted log with a template.

3. A communications network according to Claim 2, wherein the template comprises mark-up language.

4. A method of managing a communications network in which a network element comprises a network element client, the network element client
i) receiving a log from the network element;
ii) processing the received log; and
iii) forwarding the processed log to a monitoring server

5. A method according to Claim 4, wherein the method comprises the further step of
iv) forwarding the processed log to a client terminal.

6. A method according to Claim 4 or Claim 5, wherein the processing of the log comprises processing the extracted log with a template.

7. A method according to Claim 4 wherein the template comprises mark-up language.

8. A computer program product, comprising computer executable code for performing a method according to any of Claims 4 to 7.
